# EUROPEAN PATENT APPLICATION

(11) **EP 4 818 924 A1**
(43) Date of publication of application: **07.10.2026**
(21) Application number: 24916847.7
(22) Date of filing: 30.12.2024
(51) Int. Cl.: G06F 16/2455, G06F 16/27

(54) **DATA TABLE PROCESSING**

(30) Priority: 08.01.2024 CN 202410027884
(71) Applicant: Cloud Intelligence Assets Holding (Singapore) Private Limited, Singapore 189554 (SG)
(72) Inventor: WANG, Yilei, Hangzhou, Zhejiang 310030 (CN); ZENG, Xiangdong, Hangzhou, Zhejiang 310030 (CN); WANG, Sheng, Singapore 189554 (SG); LI, Feifei, Hangzhou, Zhejiang 310030 (CN)
(74) Representative: 2SPL Patentanwälte PartG mbB
(86) International application number: PCT/IB2024/063264
(87) International publication number: WO 2025/149832

(57) **Abstract**

Provided in the present application are a data table processing method and apparatus, and a device and a computer program product. The data table processing method comprises: acquiring a first data table and a second data table, wherein the first data table and the second data table are both stored in a plurality of distributed partitions, and the first data table and the second data table comprise the same attribute items; extending the second data table on the basis of the attribute items in the first data table, so as to obtain a second extended table; extending the first data table on the basis of the attribute items in the second data table, so as to obtain a first extended table; adding a data column to the first extended table, so as to obtain an adjusted extended table; and associating the second extended table with the adjusted extended table, so as to obtain an associated data table corresponding to the first data table and the second data table.

## Description

### TECHNICAL FIELD

The present disclosure relates to the field of data processing technology, and in particular, to data table processing.

### BACKGROUND

With the arrival of the era of big data, a distributed computing method, as an effective solution for dealing with insufficient computing power for big data, has gradually become popular. Specifically, distributed computing typically needs to distribute data and computing tasks to a plurality of partitions for processing, so as to improve the quality and efficiency of data processing.

However, since different partitions store different data, when a data processing task involves data distributed across a plurality of partitions, it is often necessary to sequentially perform data processing operations on each involved partition to obtain a data processing result, which greatly lengthens the data processing procedure and simultaneously reduces the efficiency of data processing.

### SUMMARY

An embodiment of the present disclosure provides a method and apparatus for processing a data table, a device, and a computer program product, which perform an association operation on different data tables stored in a plurality of distributed partitions to obtain an associated data table, and then perform a corresponding data processing operation based on the associated data table, thereby improving the quality and efficiency of data processing.

In a first aspect, an embodiment of the present disclosure provides a method for processing a data table, including: obtaining a first data table and a second data table, wherein the first data table and the second data table are both stored in a plurality of distributed partitions, and the first data table and the second data table include one or more same attribute items; expanding the second data table based on the same attribute items in the first data table to obtain a second expanded table; expanding the first data table based on the same attribute items in the second data table to obtain a first expanded table; adding a data column to the first expanded table to obtain an adjusted expanded table, wherein parameter values included in the data column are used for reordering the first expanded table, so that data in the first expanded table and data in the second expanded table are aligned; associating the second expanded table and the adjusted expanded table to obtain an associated data table corresponding to the first data table and the second data table.

In a second aspect, an embodiment of the present disclosure provides an apparatus for processing a data table, including: an obtaining module, configured to obtain a first data table and a second data table, wherein the first data table and the second data table are both stored in a plurality of distributed partitions, and the first data table and the second data table include one or more same attribute items; an expansion module, configured to expand the second data table based on the same attribute items in the first data table to obtain a second expanded table; the expansion module is further configured to expand the first data table based on the same attribute items in the second data table to obtain a first expanded table; a processing module, configured to add a data column to the first expanded table to obtain an adjusted expanded table, wherein parameter values included in the data column are used for reordering the first expanded table, so that data in the first expanded table and data in the second expanded table are aligned; the processing module is further configured to associate the second expanded table and the adjusted expanded table to obtain an associated data table corresponding to the first data table and the second data table.

In a third aspect, an embodiment of the present disclosure provides an electronic device, including: a memory and a processor; wherein the memory is configured to store one or more computer instructions, wherein the one or more computer instructions, when executed by the processor, cause the processor to implement the method for processing a data table in the first aspect above.

In a fourth aspect, an embodiment of the present disclosure provides a computer storage medium, configured to store a computer program, wherein the computer program, when executed by a computer, causes the computer to implement the method for processing a data table in the first aspect above.

In a fifth aspect, an embodiment of the present disclosure provides a computer program product, including: a computer program, wherein when the computer program is executed by a processor of an electronic device, the processor is caused to perform the steps in the method for processing a data table in the first aspect above.

The method and apparatus for processing a data table, the device, and the computer program product provided by this embodiment, by obtaining a first data table and a second data table, expanding the second data table based on the attribute item in the first data table to obtain a second expanded table; expanding the first data table based on the attribute item in the second data table to obtain a first expanded table; then adding a data column to the first expanded table to obtain an adjusted expanded table, and associating the second expanded table and the adjusted expanded table to obtain an associated data table corresponding to the first data table and the second data table, effectively implement an association operation on different data tables stored in a plurality of distributed partitions, and then performs a corresponding data processing operation based on the obtained associated data table, which greatly improves the quality and efficiency of data processing, and ensures the practicality of the method, which is conducive to market promotion and application.

### BRIEF DESCRIPTION OF DRAWINGS

In order to more clearly illustrate the technical solutions in the embodiments of the present disclosure or the related art, a brief introduction of the drawings used in the description of the embodiments or the related art will be given below. Apparently, the drawings in the following description are some embodiments of the present disclosure. For those of ordinary skill in the art, other drawings can also be obtained based on these drawings without any creative effort.
FIG. 1 is a schematic diagram of the principle of a method for processing a data table provided by an embodiment of the present disclosure.
FIG. 2 is a schematic flowchart of a method for processing a data table provided by an embodiment of the present disclosure.
FIG. 3 is a schematic flowchart of expanding the second joined table to obtain a second expanded table provided by an embodiment of the present disclosure.
FIG. 4 is a schematic flowchart of performing prefix sum calculation on expansion times to obtain calculated parameters provided by an embodiment of the present disclosure.
FIG. 5 is a schematic structural diagram of an apparatus for processing a data table provided by an embodiment of the present disclosure.
FIG. 6 is a schematic structural diagram of an electronic device corresponding to the apparatus for processing a data table provided by the embodiment shown in FIG. 5.

### DETAILED DESCRIPTION

In order to make the objectives, technical solutions, and advantages of the embodiments of the present disclosure clearer, the technical solutions in the embodiments will be clearly and completely described below with reference to the drawings in the embodiments. Apparently, the described embodiments are only some embodiments of the present disclosure, not all of the embodiments. Based on the embodiments in the present disclosure, all other embodiments obtained by those of ordinary skill in the art without any creative effort fall within the scope of protection of the present disclosure.

The terms used in the embodiments of the present disclosure are only for the purpose of describing specific embodiments, and are not intended to be limiting. The singular forms "a," "said" and "the" used in the embodiments and the appended claims are also intended to include the plural forms, unless the context clearly indicates otherwise. "A plurality of" generally includes at least two, but does not exclude the case of including at least one.

It should be understood that the term "and/or" used herein is merely a term describing an associative relationship for associated objects, indicating that three relationships may exist. For example, A and/or B may indicate: A exists alone, A and B exist simultaneously, and B exists alone. In addition, the character "/" herein generally indicates that the associated objects before and after it have an "or" relationship.

Depending on the context, the words "if" and "when" as used herein can be interpreted as "at the time of" or "upon" or "in response to determining" or "in response to detecting". Similarly, depending on the context, the phrases "if it is determined" or "if it is detected (a stated condition or event)" can be interpreted as "when it is determined" or "in response to determining" or "when it is detected (a stated condition or event)" or "in response to detecting (a stated condition or event)".

It should also be noted that the terms "including", "comprising" or any other variant thereof are intended to cover non-exclusive inclusion, such that a product or system including a series of elements not only includes those elements, but also includes other elements not explicitly listed, or further includes elements inherent to such product or system. In the absence of more restrictions, an element defined by the phrase "including a..." does not exclude the existence of additional identical elements in the product or system including the element.

In addition, the sequence of steps in each of the method embodiments described below is merely an example and is not a strict limitation.

### Definition of Terms

Trusted Execution Environment (TEE): an isolated execution environment with security capabilities, in which data can be securely computed without the risk of being stolen.

TEE-based encrypted database: a common encrypted database solution. A user encrypts data and uploads it to a database, and uploads a key to the TEE. During computation, the data in the database is securely decrypted in the TEE for computation, and the computation result is re-encrypted before leaving the TEE and then sent to the user. Since the data exists in encrypted form throughout the circulation process except inside the TEE, data is securely protected to a certain extent.

Shuffle: an operation of redistributing data in a distributed system according to data processing requirements in a certain manner, the purpose of which is to facilitate subsequent data processing. The implementation is generally that each partition sends data to other partitions as needed.

Data aggregation operation (reduceByKey): used to merge values with the same key together.

Oblivious algorithm: commonly used to describe an algorithm. In a standalone scenario, an oblivious algorithm refers to an algorithm in which the reading from or writing to memory locations is completely independent of the input of the algorithm, and is only related to some public information (such as the length of input or output data). In a distributed scenario, an oblivious algorithm refers to an algorithm in which the volume of data exchanged between partitions is independent of the input, while whether each partition's reading from or writing to memory locations in the local computation process is completely independent of the input of the algorithm depends on the context. In this proposal, there is no oblivious requirement on the algorithm for local computation at each partition.

Dummy data: meaningless elements used as padding bits in an oblivious algorithm, the purpose of which is to pad the data volume to a specified size to prevent the actual size of the data volume from leaking private information.

In order to understand the specific implementation process of the technical solution in this embodiment, a brief description of the related art is first given below.

In the field of encrypted databases based on a Trusted Execution Environment (TEE), data is securely protected through encryption, and during computation, it is typically necessary to securely decrypt the data in a trusted area before computation. In the era of big data, a single machine is difficult to complete computation operations on a large amount of data, and the additional encryption and decryption operations undoubtedly further increase the load of the computation operations. For this reason, a distributed computing method, as an effective solution for dealing with insufficient computing power in big data computation, has gradually become popular. Distributed computing typically needs to distribute data and computing tasks to a plurality of partitions for processing, so as to improve the quality and efficiency of data processing.

However, even if data has been encrypted and protected by an encrypted database, during data computation at each partition in a distributed system, there is still a serious privacy leakage problem regarding the volume of data transmitted through mutual communication. For example, when a distributed open-source processing system executes a data aggregation operator (reduceByKey), the first step is to concentrate values with the same key to the same partition through a shuffle operator, so as to facilitate subsequent computation. Through observation, during the shuffle process of data redistribution, the volume of data received by each partition can be used to roughly estimate the data distribution of the original data on the key. Therefore, unlike non-encrypted databases, these operators need to be redesigned as oblivious algorithms, so that the volume of data communicated between partitions during the computation process is independent of the data input, thereby achieving comprehensive protection of data.

Common operators for database queries include: a filter operator, a group by aggregate operator, a project operator, an order by operator, etc. The difficulty of transforming these operators into oblivious algorithms is not significant.

Related Art 1 implements a distributed database query system that satisfies oblivious requirements. The distributed database query system can support sorting, filtering, and aggregation operations. However, the query system does not support a general natural join operator, and only supports a primary key-foreign key type of natural join operator, lacking generality.

Related Art 2 implements an efficient distributed database operator computation scheme. The computation scheme optimizes filtering and aggregation operations, removes dependency on sorting operations, and also supports general natural join operations. However, the scheme has the following disadvantages in terms of security and efficiency.

In terms of security, the algorithm relies on two public values, alpha and beta, which respectively represent the maximum repetition degree of the two tables participating in the natural join on the keys of the corresponding join conditions. If these two values themselves are also private information, then the algorithm will not be applicable, otherwise, the security requirements will be violated.

In terms of efficiency, the algorithm pads each partition with some dummy data to a total of M/p+alpha*beta entries, where M is the number of rows in the output result of the natural join operator, and p is the total number of partitions. An algorithm that achieves computation balance should have a total data volume of exactly M/p entries in each partition, meaning that the number of dummy data entries padded by the scheme to meet the requirements of the oblivious algorithm is up to alpha*beta. Before and after padding, the algorithm corresponds to two rounds of complete communication, with a total communication volume of approximately N+2M+2*alpha*beta*p. In the worst case, alpha*beta=N², where N is the number of rows of the two tables participating in the natural join. Therefore, the scheme is actually very inefficient in many scenarios; moreover, for common natural join operators, it is not obvious how to transform them into oblivious algorithms. If the algorithm is improperly designed, it will lead to a significant increase in communication volume and a decrease in computation efficiency, or even deviate from the original intention of distributed computing.

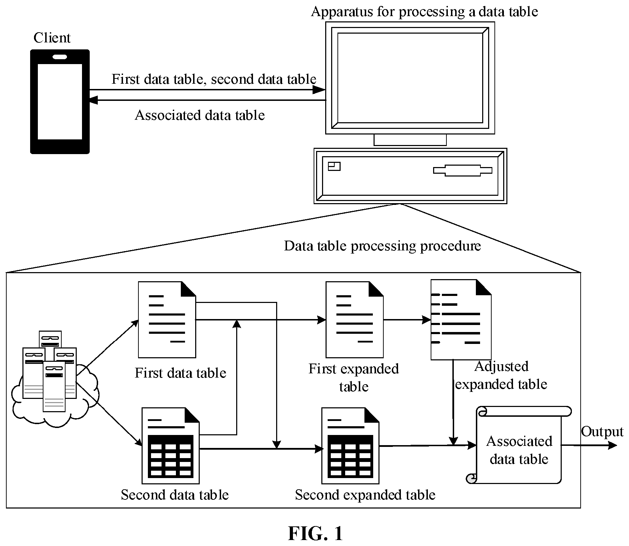

In order to solve the above technical problems, this embodiment provides a method and apparatus for processing a data table, and a device. Referring to FIG. 1, the execution entity of the method for processing a data table provided by this embodiment may be an apparatus for processing a data table. It should be noted that the apparatus for processing a data table may be implemented as a terminal device, a personal computer, a tablet computer, a local server, or a cloud server. In this case, when the apparatus for processing a data table is implemented as a cloud server, the method for processing a data table is executed in the cloud. A number of computing nodes (cloud servers) is deployed in the cloud, and each computing node has processing resources such as computation and storage. In the cloud, a plurality of computing nodes may be organized to provide a certain service, and of course, a single computing node may also provide one or more services. The manner in which the cloud provides the service may be to provide a service interface externally, and a user invokes the service interface to use the corresponding service. The service interface includes a Software Development Kit (SDK), an Application Programming Interface (API), and other forms.

The apparatus for processing a data table is communicatively connected to a client, wherein the client is used for a user to perform an application to implement data table processing operations. The client described above may be any computing device with a certain data transmission capability. In specific implementation, the client may be a mobile phone, a personal computer (PC), a tablet computer, a designated application, etc. In addition, the basic structure of the client may include: at least one processor. The number of processors depends on the configuration and type of the client. The client may also include a memory, which may be volatile, such as a Random Access Memory (RAM), or non-volatile, such as a Read-Only Memory (ROM), a flash memory, etc., or may include both types simultaneously. The memory typically stores an Operating System (OS), one or more application programs, and may also store program data, etc. In addition to the processor and the memory, the client also includes some basic configurations, such as a network interface chip, an IO bus, a display component, and some peripheral devices. Optionally, some peripheral devices may include, for example, a keyboard, a mouse, a stylus, a printer, etc. Other peripheral devices are well known in the art and will not be described in detail herein.

The apparatus for processing a data table refers to a device that can provide data table processing operations in a network virtual environment, and typically refers to an apparatus that uses a network to perform information planning and data table processing operations. In terms of physical implementation, the apparatus for processing a data table may be any device that can provide computing services, respond to data table processing requests, and perform data table processing operations based on the data table processing requests, such as a cluster server, a conventional server, a cloud server, a cloud host, a virtual center, etc. The composition of the apparatus for processing a data table mainly includes a processor, a hard disk, a memory, a system bus, etc., which is similar to a general computer architecture.

In the above embodiment of the present disclosure, the client is connected to the apparatus for processing a data table via a network connection, and the network connection is a wireless or wired network connection. If the client is communicatively connected to the apparatus for processing a data table, the network standard of the mobile network is any one of 2G (GSM), 2.5G (GPRS), 3G (WCDMA, TD-SCDMA, CDMA2000, UTMS), 4G (LTE), 4G+ (LTE+), WiMax, 5G, 6G, etc.

In the embodiment of the present disclosure, the client is configured to generate or obtain a data table processing request. Specifically, the client may display a human-machine interaction interface, obtain an execution operation input by a user in the human-machine interaction interface, and generate or obtain a data table processing request based on the execution operation. In order to implement the data table processing operation, the data table processing request may be sent to the apparatus for processing a data table.

The apparatus for processing a data table is configured to obtain a data table processing request sent by a client, and then may determine a first data table and a second data table corresponding to the data table processing request, wherein the first data table and the second data table are each a complete data table, and both are stored in a plurality of distributed partitions, that is, a plurality of data sub-tables constituting the first data table are evenly distributed and stored in the respective partitions, a plurality of data sub-tables constituting the second data table are evenly distributed and stored in the respective partitions, and furthermore, for the first data table and the second data table, the first data table and the second data table may include the same attribute item, and the same attribute item may include one type, two types, or more types, etc.

Since the first data table and the second data table are stored in a plurality of distributed partitions, in order to improve the quality and efficiency of data processing and minimize the volume of data communication, after obtaining the first data table and the second data table corresponding to the data table processing request, an expansion operation is performed on the second data table based on the attribute item in the first data table to obtain a second expanded table. Similarly, an expansion operation is performed on the first data table based on the attribute item in the second data table to obtain a first expanded table.

After performing the expansion operation on the first data table and the second data table, the data in the obtained first expanded table and the second expanded table are not aligned. In order to stably perform processing operations on the first data table and the second data table, a data column is added to the first expanded table, so as to obtain an adjusted expanded table with data aligned with the data in the second expanded table. After obtaining the second expanded table and the adjusted expanded table, an association operation is performed on the second expanded table and the adjusted expanded table, so as to obtain an associated data table corresponding to the first data table and the second data table, and then a corresponding data processing operation is performed based on the associated data table. In this way, when data processing operations need to be performed based on the first data table and the second data table, the data processing operations is directly performed based on the associated data table, thereby effectively improving the quality and efficiency of data processing, which is conducive to market promotion and application.

Some embodiments of the present disclosure will be described in detail below with reference to the drawings. In the case where there is no conflict between the embodiments, the following embodiments and features in the embodiments may be combined with each other. In addition, the sequence of steps in each of the method embodiments described below is merely an example and is not a strict limitation.

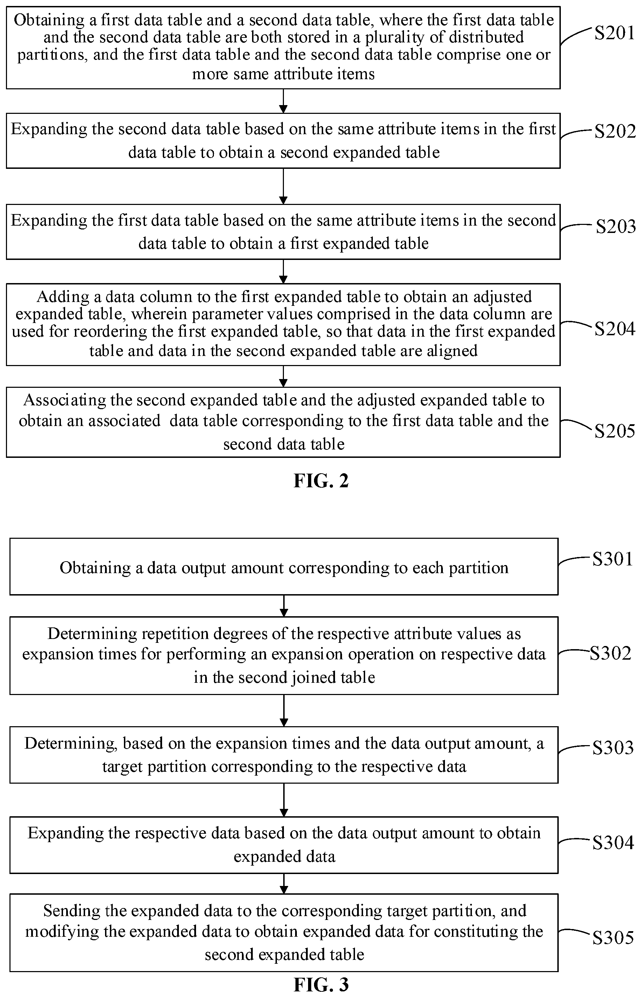

FIG. 2 is a schematic flowchart of a method for processing a data table provided by an embodiment of the present disclosure. Referring to FIG. 2, this embodiment provides a method for processing a data table. The execution entity of the method may be an apparatus for processing a data table. It may be understood that the apparatus for processing a data table may be implemented as software, or a combination of software and hardware. Specifically, when the apparatus for processing a data table is implemented as hardware, it may be various electronic devices capable of implementing data table processing operations, including but not limited to a tablet computer, a personal computer (PC), a server, etc. When the apparatus for processing a data table is implemented as software, it may be installed in the electronic devices listed above. Based on the above apparatus for processing a data table, the method for processing a data table in this embodiment may include the following step S201 to step S205.

Step S201: obtaining a first data table and a second data table, wherein both the first data table and the second data table are stored in a plurality of distributed partitions, and the first data table and the second data table include one or more same attribute items.

Step S202: expanding the second data table based on the same attribute items in the first data table to obtain a second expanded table.

Step S203: expanding the first data table based on the same attribute item in the second data table to obtain a first expanded table.

Step S204: adding a data column to the first expanded table to obtain an adjusted expanded table, wherein parameter values included in the data column are used to reorder the first expanded table so that data in the first expanded table is aligned with data in the second expanded table.

Step S205: associating the second expanded table and the adjusted expanded table to obtain an associated data table corresponding to the first data table and the second data table.

The specific implementation principles and implementation effects of the above steps will be described in detail below.

Step S201: obtaining a first data table and a second data table, wherein both the first data table and the second data table are stored in a plurality of distributed partitions, and the first data table and the second data table include one or more same attribute items.

Wherein, when a user has a data table processing requirement, the apparatus for processing a data table may obtain the first data table and the second data table. In some instances, the first data table and the second data table are obtained through a human-machine interaction operation. In this case, obtaining the first data table and the second data table may include: displaying a human-machine interaction interface for implementing a data table processing operation; displaying a plurality of data tables in the human-machine interaction interface; obtaining an execution operation input by the user for the plurality of data tables, and obtaining the first data table and the second data table based on the execution operation. For example, when the apparatus for processing a data table stores a plurality of data tables including: data table a, data table b, data table c, data table d, and data table e, and the user has a data table processing requirement for data table b and data table c described above, the user may input a selection operation for data table b and data table c described above, so as to obtain data table b and data table c to be processed.

In other instances, the first data table and the second data table are obtained not only through a human-machine interaction operation, but also through analysis and processing. In this case, obtaining the first data table and the second data table may include: obtaining a client or a preset device communicatively connected to the apparatus for processing a data table; actively or passively obtaining a data table processing request through the client or the preset device; and determining a first data table and a second data table corresponding to the data table processing request, thereby effectively ensuring the accuracy and reliability of obtaining the first data table and the second data table.

It should be noted that the first data table and the second data table may each be a complete data table. Both the first data table and the second data table are stored in a plurality of distributed partitions, wherein the partition may be a computing unit in a distributed system, which may be a machine, such as a server; or, the partition may also be a core of a machine processor. Each partition has independent computation, storage, and network resources, and partitions collaborate to complete computing tasks through network communication.

In addition, for the first data table and the second data table, the first data table and the second data table include the same attribute item. For example, the first data table is R(A,B), and the first data table is constituted by data included in sub-table R1, sub-table R2, and sub-table R3. Sub-table R1 may be stored in partition a, sub-table R2 may be stored in partition b, and sub-table R3 may be stored in partition c, that is, the first data table R(A,B) is distributedly stored in the plurality of partitions described above. Similarly, the second data table is S(B,C), and the second data table is constituted by data included in sub-table S1, sub-table S2, and sub-table S3. Sub-table S1 may be stored in partition a, sub-table S2 may be stored in partition b, and sub-table S3 may be stored in partition c. Furthermore, the first data table R(A,B) and the second data table S(B,C) may include the same attribute item B. It can be understood that the same attribute item between the first data table and the second data table may not be limited to one type, and those skilled in the art may flexibly adjust the number of the same attribute items between the first data table and the second data table according to requirements.

When the first data table and the second data table have the same attribute item, an association processing operation is performed on the first data table and the second data table. When the first data table and the second data table do not have the same attribute item, an association processing operation on the first data table and the second data table cannot be implemented.

Step S202: expanding the second data table based on the same attribute items in the first data table to obtain a second expanded table.

After obtaining the first data table and the second data table, in order to implement a data table association operation and ensure the security of data in the first data table and the second data table, an expansion operation is performed on the second data table based on the attribute item in the first data table, wherein the attribute item in the first data table is a common attribute item included in both the first data table and the second data table, so as to obtain a second expanded table.

In some instances, the expansion operation may be implemented through a preset machine learning model, a neural network model, or a preset algorithm. In this case, expanding the second data table based on the attribute item in the first data table to obtain a second expanded table may include: obtaining a pre-trained machine learning model or neural network model; and inputting the attribute item in the first data table and the second data table into the machine learning model or neural network model to obtain a second expanded table output by the machine learning model or neural network model.

In other instances, the expansion operation is implemented not only through a machine learning model or a neural network model, but also based on the repetition degree of the attribute item in the first data table. In this case, expanding the second data table based on the attribute item in the first data table to obtain a second expanded table may include: performing group aggregation processing on the first data table based on the attribute item in the first data table to obtain a first aggregation table, wherein the first aggregation table includes the repetition degree of each attribute value under the attribute item; performing a natural join on the first aggregation table and the second data table to obtain a second joined table; and expanding the second joined table to obtain a second expanded table.

Specifically, after obtaining the first data table and the second data table, group aggregation processing is performed on the first data table based on the attribute item in the first data table to obtain a first aggregation table, wherein the first aggregation table may include the repetition degree of each attribute value under the attribute item.

For example, the first data table R(A,B) is {(a1,b1),(a1,b2),(a2,b2),(a1,b3),(a2,b4)}, and the second data table S(B,C) is {(b1,c1),(b1,c2),(b2,c2),(b2,c3),(b3,c4)}. From the above, it is seen that the first data table and the second data table have the same attribute item B, that is, the attribute item B in the first data table corresponds to the values in column b. Then, by performing a statistical operation on the attribute values under the attribute item in the first data table, the repetition degree of each attribute value under the attribute item is obtained, that is, the repetition degree of b1 is 1, the repetition degree of b2 is 2, the repetition degree of b3 is 1, and the repetition degree of b4 is 1. Based on the repetition degrees of the attribute values in the first data table, group aggregation processing is performed on the first data table to obtain a first aggregation table R(B,D), and the first aggregation table R(B,D) is {(b1,1),(b2,2),(b3,1),(b4,1)}.

After obtaining the first aggregation table and the second data table, a natural join is performed on the first aggregation table and the second data table to obtain a second joined table. In some instances, the natural join operation is implemented through a preset machine learning model or neural network model. For example, when the first aggregation table R(B,D) is {(b1,1),(b2,2),(b3,1),(b4,1)} and the second data table S(B,C) is {(b1,c1),(b1,c2),(b2,c2),(b2,c3),(b3,c4)}, by performing a natural join operation on the first aggregation table and the second data table, a second joined table S2(B,C,D) is obtained, and the second joined table S2(B,C,D) is {(b1,c1,1),(b1,c2,1),(b2,c2,2),(b2,c3,2),(b3,c4,1)}. After obtaining the second joined table, an expansion operation is performed on the second joined table, thereby effectively implementing the expansion operation on the second data table, so that the second expanded table is stably obtained.

Step S203: expanding the first data table based on the same attribute items in the second data table to obtain a first expanded table.

After obtaining the first data table and the second data table, in order to implement a data table association operation and ensure the security of data in the first data table and the second data table, an expansion operation is performed on the first data table based on the attribute item in the second data table, wherein the attribute item in the second data table is a common attribute item included in both the first data table and the second data table, so as to obtain a first expanded table.

In some instances, expanding the first data table based on the attribute item in the second data table to obtain a first expanded table may include: performing group aggregation processing on the second data table based on the attribute item in the second data table to obtain a second aggregation table, wherein the second aggregation table includes the repetition degree of each attribute value under the attribute item; performing a natural join on the second aggregation table and the first data table to obtain a first joined table; and expanding the first joined table to obtain a first expanded table.

It should be noted that the specific implementation manner, implementation effect, and implementation principle of the expansion operation on the first data table in this embodiment are similar to those of the expansion operation on the second data table in Step S202 described above, and reference may be made to the above description, which will not be repeated herein.

Step S204: adding a data column to the first expanded table to obtain an adjusted expanded table, wherein parameter values included in the data column are used to reorder the first expanded table so that data in the first expanded table is aligned with data in the second expanded table.

For the first data table and the second data table, after performing the expansion operation on the first data table and the second data table, the data in the obtained first expanded table and the data in the second expanded table are disordered. At this time, the data in the first expanded table and the data in the second expanded table are often not aligned. Therefore, in order to implement the data table processing operation, after obtaining the first expanded table, a data column is added to the first expanded table to obtain an adjusted expanded table, wherein parameter values included in the data column are used to reorder the first expanded table so that the data in the first expanded table is aligned with the data in the second expanded table.

In some instances, adding a data column to the first expanded table to obtain an adjusted expanded table may include: adding a data column with initial values of 1 to the first expanded table to obtain an intermediate expanded table; comparing two attribute values of two adjacent groups of data in the intermediate expanded table; when the two attribute values corresponding to the two adjacent groups of data are both the same, performing a summation operation on the data columns in the two adjacent groups of data to obtain a summed data column, and determining the two attribute values and the summed data column as data for constituting the adjusted expanded table; and when the two attribute values corresponding to the two adjacent groups of data are different, determining the latter data in the two adjacent groups of data as data for constituting the adjusted expanded table.

For example, when the first expanded table is $\left\{\begin{matrix}a 1 & b 1 \\ a 2 & b 2\end{matrix}\right\}$, by adding a data column with initial values of 1 to the first expanded table, an intermediate expanded table is obtained. The intermediate expanded table may be $\left\{\begin{matrix}a 1 & b 1 & 1 \\ a 2 & b 2 & 1\end{matrix}\right\}$. Then, two attribute values of two adjacent groups of data in the intermediate expanded table are both compared, that is, comparing the attribute values "a" and "b" in data {a1, b1,1} and data {a2, b2,1}. When a1 = a2 and b1 = b2, a summation operation is performed on the attribute values of data columns in the two adjacent groups of data, so as to obtain a summed data column, and the summed data column is {a1, b1,2}. Then, the two attribute values and the summed data column is determined as data for constituting the adjusted expanded table, which can ensure the accuracy and reliability of obtaining the adjusted expanded table.

Correspondingly, when the two attribute values corresponding to the two adjacent groups of data are not both the same, that is, when a1 ≠ a2 or b1 ≠ b2, the latter data in the two adjacent groups of data is determined as data for constituting the adjusted expanded table, that is, the data for constituting the adjusted expanded table at this time is {a2, b2,1}, which effectively ensures the accuracy and reliability of obtaining the adjusted expanded table.

It should be noted that, in order to align the data in the first expanded table and the second expanded table, not only may a data column be added to the first expanded table, but also a data column addition operation may be performed on the second expanded table, so as to obtain an adjusted expanded table corresponding to the second expanded table. In this case, Step S204 may become "adding a data column to the second expanded table to obtain an adjusted expanded table, wherein parameter values included in the data column are used to reorder the second expanded table so that data in the first expanded table and the second expanded table are aligned."

Step S205: associating the second expanded table and the adjusted expanded table to obtain an associated data table corresponding to the first data table and the second data table.

Since the data in the adjusted expanded table is aligned with the data in the second data table, in order to accurately implement processing operations on the first data table and the second data table, after obtaining the adjusted expanded table and the second expanded table, an association operation is performed on the second expanded table and the adjusted expanded table, so as to obtain an associated data table corresponding to the first data table and the second data table.

In some instances, the association operation may be implemented through a pre-trained machine learning model or neural network model. In this case, associating the second expanded table and the adjusted expanded table to obtain an associated data table corresponding to the first data table and the second data table may include: obtaining a pre-trained machine learning model or neural network model; and inputting the second expanded table and the adjusted expanded table into the machine learning model or neural network model to obtain an associated data table corresponding to the first data table and the second data table output by the machine learning model or neural network model, wherein the associated data table is the result obtained after performing a natural join operation on the first data table and the second data table, which effectively ensures the accuracy and reliability of determining the associated data table. For the obtained associated data table, the associated data table is stored in a plurality of distributed partitions, which can ensure the quality and effect of storing the associated data table.

In other instances, the data table association operation is implemented not only through a pre-trained machine learning model or neural network model, but also using preset rules. In this case, associating the first expanded table and the adjusted expanded table to obtain an associated data table corresponding to the first data table and the second data table includes: obtaining preset rules for sorting the first expanded table and the adjusted expanded table; sorting the first expanded table and the adjusted expanded table respectively using the preset rules to obtain a first sorted table and a second sorted table; and associating the first sorted table and the second sorted table to obtain an associated data table corresponding to the first data table and the second data table.

After obtaining the first expanded table, the preset rule for sorting the first expanded table may be first obtained, wherein the preset rule may be a lexicographic order or other sequence stored in a preset area or a preset device. Similarly, after obtaining the adjusted expanded table, the preset rule for sorting the adjusted expanded table may be first obtained, wherein the preset rule may be a lexicographic order or other sequence pre-stored in a preset area or a preset device. It should be noted that the preset rule for sorting the first expanded table and the preset rule for sorting the adjusted expanded table may be obtained synchronously or asynchronously.

After obtaining the preset rules for sorting the first expanded table and the adjusted expanded table, the first expanded table and the adjusted expanded table are sorted respectively using the preset rules, so as to obtain a first sorted table and a second sorted table. After obtaining the first sorted table and the second sorted table, an association operation is performed on the first sorted table and the second sorted table, so as to obtain an associated data table corresponding to the first data table and the second data table. For example, when the i-th data in the first data table is (b,c) and the i-th data in the second data table is (a,b1,f), where b=b1, by performing an association operation on the first data table and the second data table, an associated data table is obtained, wherein the i-th item of data in the associated data table is (a,b,c), thereby effectively implementing the data table association operation.

In yet other instances, after obtaining the associated data table corresponding to the first data table and the second data table, in order to improve the practicality of the method, a data query operation is implemented based on the obtained associated data table. In this case, the method in this embodiment may further include: obtaining a data query request; determining an associated data table corresponding to the data query request; and obtaining a data query result based on the associated data table.

Specifically, when a user has a data query requirement, the apparatus for processing a data table may obtain a data query request. In some instances, the data query request is obtained through a human-machine interaction operation, or the data query request is actively or passively obtained through a preset device. After obtaining the data query request, the data query request is analyzed and processed to determine an associated data table corresponding to the data query request. After obtaining the associated data table, a corresponding data query operation is performed based on the associated data table, so as to obtain a data query result, which effectively implements the data query operation based on the associated data table, further improving the practicality of the method.

The method for processing a data table provided by this embodiment, by obtaining a first data table and a second data table, expanding the second data table based on the attribute item in the first data table to obtain a second expanded table; expanding the first data table based on the attribute item in the second data table to obtain a first expanded table; then adding a data column to the first expanded table to obtain an adjusted expanded table, and associating the second expanded table and the adjusted expanded table to obtain an associated data table corresponding to the first data table and the second data table, effectively implements an association operation on different data tables stored in a plurality of distributed partitions, and then performs a corresponding data processing operation based on the obtained associated data table, which greatly improves the quality and efficiency of data processing, and ensures the practicality of the method, which is conducive to market promotion and application.

FIG. 3 is a schematic flowchart of expanding the second joined table to obtain a second expanded table provided by an embodiment. On the basis of the above embodiments, referring to FIG. 3, this embodiment does not limit the implementation manner of expanding the second joined table. In some instances, a pre-trained machine learning model or neural network model may be used to perform an expansion operation on the second joined table, or the expansion operation on the second joined table is performed based on the data output amount corresponding to each partition. In this case, expanding the second joined table to obtain a second expanded table in this embodiment may include Step S301 to Step S305.

Step S301: obtaining the data output amount corresponding to each partition.

Since the expansion operation on the second joined table is related to the data output amount corresponding to each partition, in order to accurately implement the expansion operation on the second joined table, the data output amount corresponding to each partition is obtained. In some instances, the data output amount corresponding to each partition may be data pre-configured by a user and stored in a preset area or a preset device. In this case, the data output amount corresponding to each partition is obtained by accessing the preset area or the preset device.

Alternatively, in other instances, the data output amount corresponding to each partition is not only pre-configured by a user, but also determined based on the number of partitions and the total output data volume. In this case, obtaining the data output amount corresponding to each partition may include: obtaining the total output data volume M and the number of partitions p; and determining the data output amount m=M/p corresponding to each partition based on the total output data volume M and the number of partitions p. For example, when the total output data volume M is 18 and the number of partitions p is 3, the data output amount corresponding to each partition is determined to be 18/3=6. At this time, the plurality of partitions perform corresponding data processing operations on data using a balancing algorithm.

Step S302: determining the repetition degrees of respective attribute values as the expansion times for performing an expansion operation on respective data in the second joined table.

After performing a natural join operation on the first aggregation table and the second data table, a second joined table is obtained, wherein the second joined table may include the repetition degree of each attribute value. Then, the repetition degree of each attribute value is determined as the expansion times for performing an expansion operation on the corresponding data item in the second joined table. For example, when the second joined table S2(B,C,D) is {(b1,c1,1),(b1,c2,1),(b2,c2,2),(b2,c3,2),(b3,c4,1)}, the "1" in (b1,c1,1) is determined as the expansion times for performing an expansion operation on the data "(b1,c1)", that is, the data "(b1,c1)" needs to be expanded 1 time. Similarly, the "1" in (b1,c2,1) is determined as the expansion times for performing an expansion operation on the data "(b1,c2)", the "2" in (b2,c2,2) is determined as the expansion times for performing an expansion operation on the data "(b2,c2)", the "2" in (b2,c3,2) is determined as the expansion times for performing an expansion operation on the data "(b2,c3)", and the "1" in (b3,c4,1) is determined as the expansion times for performing an expansion operation on the data "(b3,c4)", which effectively ensures the accuracy and reliability of determining the expansion times for performing an expansion operation on each data item in the second joined table.

Step S303: determining a target partition corresponding to the respective data based on the expansion times and the data output amount.

Since each data item in the data table is located in a different distributed partition, when performing the expansion operation, each data item needs to be sent to a corresponding target partition. Therefore, in order to implement the expansion operation on the second joined table, after obtaining the expansion times and the data output amount, the expansion times and the data output amount are analyzed and processed to determine a target partition corresponding to each data item. In some instances, the target partition is determined by analyzing and processing the expansion times and the data output amount through a pre-trained machine learning model or neural network model. In this case, determining the target partition corresponding to each data item based on the expansion times and the data output amount may include: obtaining a pre-trained machine learning model or neural network model; and inputting the expansion times, the data output amount, and the second joined table into the machine learning model or neural network model to obtain the target partition corresponding to each data item, output by the machine learning model or neural network model.

In other instances, the target partition corresponding to each data item is determined not only through a pre-trained machine learning model or neural network model, but also by analyzing and processing the expansion times and the data output amount using a prefix sum algorithm. In this case, determining the target partition corresponding to each data item in the second joined table based on the expansion times and the data output amount may include: performing prefix sum calculation on the expansion times to obtain calculated parameters; determining 0 value and the calculated parameters as processed parameters; obtaining quotient values of the processed parameters divided by the data output amount; and for the respective data, determining the target partition corresponding to the data based on the sum of the quotient of the data and 1.

For example, when the expansion times are (1,3,1,1,5,2,1,1,3), after performing prefix sum calculation on the expansion times, the obtained calculated parameters are (1,4,5,6,11,13,14,15). Then, 0 values and the calculated parameters are determined as processed parameters, and the processed parameters are (0,1,4,5,6,11,13,14,15). When the number of partitions is 3 and the output data volume of each partition is 6, quotient values of the above respective processed parameters divided by the data output amount are obtained, that is, the quotient value of 0/6 is 0, the quotient value of 1/6 is 0, the quotient value of 4/6 is 0, the quotient value of 5/6 is 0, the quotient value of 6/6 is 1, the quotient value of 11/6 is 1, the quotient value of 13/6 is 2, the quotient value of 14/6 is 2, and the quotient value of 15/6 is 2.

After obtaining the quotient values corresponding to the above processed parameters, the sum of each quotient value and 1 is obtained, so as to obtain a sum value sequence (1,1,1,1,2,2,3,3,3) corresponding to a plurality of calculated parameters. From the above, it is determined that the target partition corresponding to the data for the sum value "1" is the partition with a preset identifier of "1", the target partition corresponding to the data for the sum value "2" is the partition with a preset identifier of "2", and the target partition corresponding to the data for the sum value "3" is the partition with a preset identifier of "3", thereby effectively ensuring the accuracy and reliability of determining the target partition corresponding to each data.

It should be noted that for each data, the target partition corresponding to the data is determined not only by the sum of the corresponding quotient value and 1, but also by first obtaining the difference between the corresponding processed parameter and 1, then obtaining the ratio of the difference to the data output amount, performing a ceiling operation on the ratio, and finally determining the target partition corresponding to the data based on the parameter after the ceiling operation, which can also ensure the accuracy and reliability of determining the target partition.

Step S304: expanding the respective data based on the data output amount to obtain expanded data.

In order to implement the data expansion operation, after obtaining the data output amount, an expansion operation is performed on each data item based on the data output amount to obtain expanded data. In some instances, the expansion operation is implemented through a pre-trained machine learning model or neural network model. In this case, expanding the respective data based on the data output amount to obtain expanded data may include: obtaining a pre-trained machine learning model or neural network model; and inputting the data output amount and the respective data into the machine learning model or neural network model to obtain expanded data output by the machine learning model or neural network model.

In other instances, the data expansion operation is implemented not only through a pre-trained machine learning model or neural network model, but also based on the total number of data output bits. In this case, expanding the respective data based on the data output amount to obtain expanded data may include: determining the total number of data output bits based on the data output amount; and expanding the respective data based on the total number of data output bits to obtain expanded data.

Since the data expansion operation is related to the total number of data output bits, in order to accurately implement the data expansion operation, after obtaining the data output amount, the total number of data output bits is determined based on the data output amount. In some instances, determining the total number of data output bits based on the data output amount may include: obtaining a pre-configured mapping relationship between the data output amount and the total number of data output bits, and determining the total number of data output bits based on the data output amount and the mapping relationship.

In other instances, the total number of data output bits is determined not only through a preset mapping relationship, but also through a preset formula. In this case, determining the total number of data output bits based on the data output amount may include: performing a square root operation on the data output amount to obtain a processed value; determining the sum of the data output amount and the processed value, and performing a rounding operation on the sum to obtain the total number of data output bits. For example, when the data output amount is 6, the calculation of $\left⌈6+\sqrt{6}\right⌉$ is performed to obtain that the total number of data output bits is 9, which effectively ensures the accuracy and reliability of determining the total number of data output bits.

After obtaining the total number of data output bits, each data item is expanded based on the total number of data output bits to obtain expanded data. In some instances, not only may each data item be expanded through a pre-trained machine learning model or neural network model, but also the data expansion operation is implemented in combination with preset padding bits. In this case, expanding the respective data based on the total number of data output bits to obtain expanded data may include: obtaining all data that need to be sent to the same target partition; detecting whether the total number of data bits of all data satisfies the total number of data output bits; if not, performing a data expansion operation based on the total number of data bits of all data and preset padding bits to obtain expanded data, wherein the number of data bits of the expanded data satisfies the total number of data output bits.

For example, when the number of partitions is 3, the data corresponding to each data item described above are: the first partition corresponds to {(a,0),(c,4),(f,11),(h,14)}, the second partition corresponds to {(b,1),(e,6),(g,13)}, and the third partition corresponds to {(d,5),(i,15)}. The processed parameter corresponding to data a in the first partition is 0, and the target partition corresponding to data a is determined to be the first partition through the processed parameter and the data output amount. Similarly, through analysis and processing, it is determined that: the target partition corresponding to data c is the first partition, the target partition corresponding to data f is the second partition, the target partition corresponding to data h is the third partition, the target partition corresponding to data b is the first partition, the target partition corresponding to data e is the second partition, the target partition corresponding to data g is the third partition, the target partition corresponding to data d is the first partition, and the target partition corresponding to data i is the third partition.

After statistics, the target partitions of data a and data c in the first partition are both the first partition. At this time, since the number of data bits (2 bits) of data a and data c does not satisfy the total number of data output bits (9 bits), a data expansion operation is performed based on the total number of data bits of all data and preset padding bits to obtain expanded data, that is, expanding data (a,c) into data (a,c,x,x,x,x,x,x,x), where "x" is preset dummy data (or referred to as preset padding bits), thereby effectively implementing the data expansion operation.

Similarly, the target partition of data f in the first partition is the second partition. At this time, since data f does not satisfy the total number of data output bits (9 bits), a data expansion operation is performed based on the total number of data bits of all data and preset padding bits to obtain expanded data, that is, expanding data (f) into data (f,x,x,x,x,x,x,x,x), where "x" is preset padding bits. The target partition of data h in the first partition is the third partition, and then data (h) is expanded into data (h,x,x,x,x,x,x,x,x), thereby effectively implementing the data expansion operation.

The target partition corresponding to data b in the second partition is the first partition, and then data (b) is expanded into data (b,x,x,x,x,x,x,x,x). The target partition corresponding to data e in the second partition is the second partition, and then data (e) is expanded into data (e,x,x,x,x,x,x,x,x). The target partition corresponding to data g in the second partition is the third partition, and then data (g) is expanded into (g,x,x,x,x,x,x,x,x). The target partition corresponding to data d in the third partition is the first partition, and then data (d) is expanded into (d,x,x,x,x,x,x,x,x). The target partition corresponding to data i in the third partition is the third partition, and then data (i) is expanded into (i,x,x,x,x,x,x,x,x), thereby effectively implementing the expansion operation on each data item, so that expanded data is stably obtained.

Step S305: sending the expanded data to the corresponding target partition, and modifying the expanded data to obtain expanded data for constituting a second expanded table.

After obtaining the expanded data and determining the target partition corresponding to the expanded data, the expanded data is sent to the target partition. Since the data received in the target partition includes many preset padding bits, in order to ensure the quality and effect of data expansion, after sending the expanded data to the target partition, a modifying operation is performed on the expanded data, so as to obtain expanded data constituting the second expanded table. In some instances, a pre-trained machine learning model or neural network model may be used to perform a modifying operation on the expanded data, so that the second expanded table is stably obtained.

Alternatively, in other instances, the modifying operation on the expanded data is implemented not only through a pre-trained machine learning model or neural network model, but also by deleting excess preset padding bits. In this case, modifying the expanded data to obtain expanded data for constituting a second expanded table may include: obtaining remainders of the processed parameters divided by the data output amount; determining the positions of the respective data stored in the target partition based on the remainders; deleting excess preset padding bits based on the positions and the data output amount to obtain sorted data; and modifying the preset padding bits included in the sorted data as the preceding adjacent data to obtain target data for constituting the second expanded table.

For example, when the processed parameters are (0,1,4,5,6,11,13,14,15), the data corresponding to the processed parameters described above include: the first partition corresponds to {(a,0),(c,4),(f,11),(h,14)}, the second partition corresponds to {(b,1),(e,6),(g,13)}, and the third partition corresponds to {(d,5),(i,15)}. When the output data volume is 6, the remainders of dividing the processed parameters by the data output amount are obtained. Specifically, the remainders of the processed parameters corresponding to data a, b, c, d, e, f, g, h, i are: 0, 1, 4, 5, 0, 1, 1, 2, 3. The above remainders are used to indicate the positions of the respective data stored in the target partition, and the target partition corresponding to the respective data is determined by the quotient value of dividing the processed parameters by the data output amount.

Through analysis and processing, it is determined that data a is located at position 0 in the target partition (i.e., the first partition), data b is located at position 1 in the target partition (i.e., the first partition), data c is located at position 4 in the target partition (i.e., the first partition), and data d is located at position 5 in the target partition (i.e., the first partition). Then, excess preset padding bits are deleted based on the above positions and the data output amount, so as to obtain the sorted data located in the target partition (first partition): a, b, x, x, c, d, where x is the remaining preset padding bits. Similarly, the sorted data located in the target partition (second partition) is obtained: e, x, x, x, x, f, where x is the remaining preset padding bits; and the sorted data located in the target partition (third partition) is obtained: x, g, h, i, x, x, where x is the remaining preset padding bits.

After obtaining the sorted data, the preset padding bits included in the sorted data are rewritten as the preceding adjacent data, that is, changing "x,x" in the first partition to "b,b" to obtain first target data "a,b,b,b,c,d" located in the first partition. Similarly, "x" in the second partition is rewritten as "e" to obtain second target data "e,e,e,e,e,f" located in the second partition. For the first data "x" in the third partition, it is adjacent to the last data "f" in the second partition, and thus the first data "x" in the third partition is rewritten as "f", and the fifth and sixth data "x" in the third partition are rewritten as "i". Through the above modifying operation, third target data "f,g,h,i,i,i" located in the third partition is obtained. The first target data, the second target data, and the third target data are all target data constituting the second expanded table, which effectively ensures the stability and reliability of obtaining the second expanded table.

In this embodiment, by obtaining the data output amount corresponding to each partition, determining the repetition degree of each attribute value as the expansion times for performing an expansion operation on corresponding data item in the second joined table, then determining the target partition corresponding to each data item based on the expansion times and the data output amount, expanding each data item based on the data output amount to obtain expanded data, then sending the expanded data to the corresponding target partition, and modifying the expanded data, expanded data for constituting a second expanded table is stably obtained, thereby effectively implementing a stable expansion operation on the second joined table.

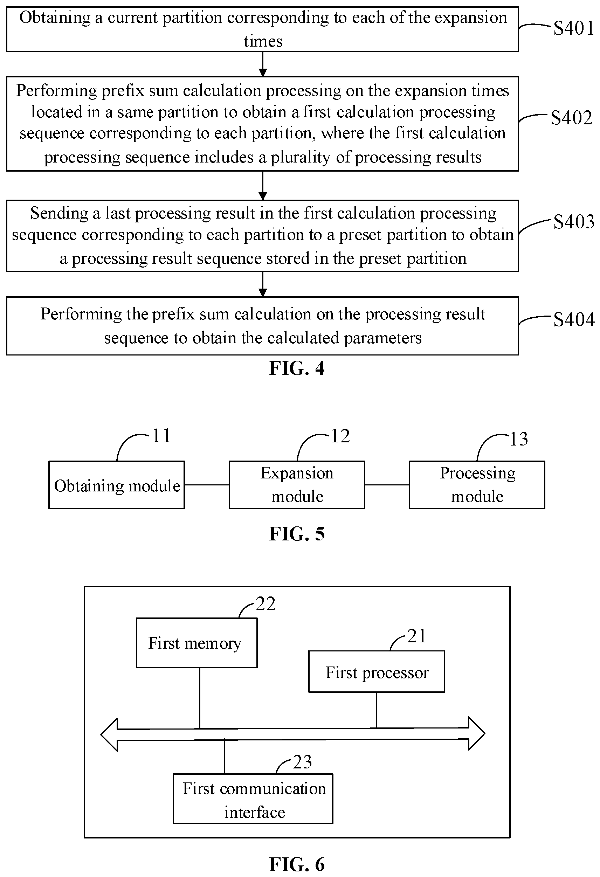

FIG. 4 is a schematic flowchart illustrating a process of performing prefix sum calculation on expansion times to obtain calculated parameters according to an embodiment; based on the foregoing embodiment, as shown in FIG. 4, this embodiment provides an implementation manner of performing prefix sum calculation on expansion times, and specifically, performing prefix sum calculation on expansion times to obtain calculated parameters in this embodiment may include Step S401 to Step S404.

Step S401: obtaining a current partition corresponding to each of the expansion times.

After obtaining the expansion times, the current partition corresponding to each of the expansion times is determined based on data corresponding to each expansion time. In some instances, for each expansion time, the current partition corresponding to data (which is corresponding to the expansion time) is determined as the current partition corresponding to the expansion time. For example, when the expansion times are (1, 3, 1, 1, 5, 2, 1, 1, 3), the current partition corresponding to the above expansion times (1, 3, 1) is determined as a first partition, the current partition corresponding to the above expansion times (1, 5, 2) is determined as a second partition, and the current partition corresponding to the above expansion times (1, 1, 3) is determined as a third partition.

Step S402: performing prefix sum calculation processing on expansion times located in the same partition, to obtain a first calculation processing sequence corresponding to each partition, the first calculation processing sequence including a plurality of processing results.

After obtaining the current partition corresponding to each of the expansion times, prefix sum calculation processing is performed on expansion times located in the same partition, thereby obtaining a first calculation processing sequence located in each partition, the first calculation processing sequence includes a plurality of processing results. In some instances, a pre-trained machine learning model or neural network model may be used to perform prefix sum calculation processing on expansion times located in the same partition, to obtain a first calculation processing sequence corresponding to each partition.

For example, when expansion times (1, 3, 1) are stored in the first partition, after performing prefix sum calculation processing on the above expansion times, a first calculation processing sequence corresponding to the first partition is obtained, and the first calculation processing sequence is: 1, 4, 5. Similarly, when expansion times (1, 5, 2) are stored in the second partition, after performing prefix sum calculation processing on the above expansion times, a first calculation processing sequence corresponding to the second partition is obtained, and the first calculation processing sequence is: 1, 6, 8; when expansion times (1, 1, 3) are stored in the third partition, after performing prefix sum calculation processing on the above expansion times, a first calculation processing sequence corresponding to the third partition is obtained, and the first calculation processing sequence is: 1, 2, 5, thereby effectively ensuring accuracy and reliability in determining the first calculation processing sequence corresponding to each partition.

Step S403: sending a last processing result in the first calculation processing sequence corresponding to each partition to a preset partition, to obtain a processing result sequence stored in the preset partition.

After obtaining the first calculation processing sequence corresponding to each partition, the last processing result in the first calculation processing sequence corresponding to each partition is sent to a preset partition, wherein the preset partition is a first partition, a second partition, or an Nth partition among the configured plurality of partitions. Taking the first partition as the preset partition as an example, after the last processing result in the first calculation processing sequence corresponding to each partition is obtained, it is sent to the first partition, thereby obtaining a processing result sequence stored in the preset partition.

For example, when the first partition is the preset partition, if the first calculation processing sequence corresponding to the first partition is: 1, 4, 5; the first calculation processing sequence corresponding to the second partition is: 1, 6, 8; and the first calculation processing sequence corresponding to the third partition is: 1, 2, 5, then the last processing result (5, 8, 5) in the first calculation processing sequence corresponding to each partition is sent to the first partition, thereby obtaining a processing result sequence stored in the first partition: 5, 8, 5.

Step S404: performing prefix sum calculation on the processing result sequence to obtain calculated parameters.

After obtaining the processing result sequence, prefix sum calculation processing is performed on the processing result sequence, thereby obtaining the calculated parameters. In some instances, performing prefix sum calculation on the processing result sequence to obtain the calculated parameters includes: performing prefix sum calculation on the processing result sequence to obtain a second calculation processing sequence, the second calculation processing sequence including a plurality of calculation processing results; determining a target partition corresponding to each calculation processing result in the second calculation processing sequence; and sending the calculation processing result to the corresponding target partition, and performing summation on the calculation processing result and the expansion times stored in the same target partition, to obtain the corresponding calculated parameter.

Wherein determining a target partition corresponding to each calculation processing result in the second calculation processing sequence includes: sorting the plurality of calculation processing results included in the second calculation processing sequence based on partition identifiers corresponding to the respective calculation processing results, to obtain result sorting information; and determining a sum of a current sorting position of each calculation processing result and 1 as the target partition corresponding to the calculation processing result.

For example, when the processing result sequence is: 5, 8, 5, prefix sum calculation is performed on the processing result sequence to obtain a second calculation processing sequence, and the second calculation processing sequence is: 5, 13, 18. Then the above second calculation processing sequence is sorted based on identifiers of source partitions corresponding to processing results in the above processing result sequence. Since 5 corresponds to the first partition, 13 corresponds to the second partition, and 18 corresponds to the third partition, after sorting the second calculation processing sequence, result sorting information is obtained, i.e., 5, 13, 18, that is, the result sorting information is exactly the same as the second calculation processing sequence.

Then the target partition corresponding to 5 is determined as the second partition, the target partition corresponding to 13 is determined as the third partition, and 5 is sent to the second partition and 13 is sent to the third partition. Then summation is performed on the original data stored in the second partition and the data "5", thereby obtaining calculated parameter stored in each partition. For example: the first partition stores: 1, 3, 1; the second partition stores: 6, 8, 7; the third partition stores: 14, 14, 16, thereby stably implementing prefix sum calculation on the processing result sequence and ensuring accuracy and reliability in obtaining the calculated parameters.

In this embodiment, by obtaining a current partition corresponding to each of the expansion times, performing prefix sum calculation processing on expansion times located in the same partition to obtain a first calculation processing sequence corresponding to each partition, then sending a last processing result in the first calculation processing sequence corresponding to each partition to a preset partition to obtain a processing result sequence stored in the preset partition, and performing prefix sum calculation on the processing result sequence, calculated parameters are stably obtained, and then a data table processing operation is implemented based on the calculated parameters, thereby further ensuring practicality of the method.

In a specific application, taking the number of distributed partitions as three as an example, this application embodiment provides an oblivious efficient algorithm for a natural join operator in a distributed scenario. The oblivious efficient algorithm for the natural join operator relies on the following basic operators to be implemented: a primary key-foreign key natural join operator, a sorting operator, a group aggregation operator, a prefix sum operator, and an expansion operator. The primary key-foreign key natural join, the sorting operator, and the group aggregation operator can directly adopt implementation manners in the related art. For ease of understanding the implementation principle and implementation effect of the oblivious efficient algorithm in this application embodiment, the implementation principles of the prefix sum operator and the expansion operator are first described below:

Taking input parameters as { x₁, x₂, ... , x_{N} } and output parameters as { x₁, x₁ + x₂, ... , x₁ + x₂ + ··· + x_{N} } as an example, the implementation principle of the prefix sum operator is described, wherein the above "+" operation is not limited to arithmetic addition, and is any binary operation satisfying the associative law, for example: arithmetic multiplication, logical XOR, taking the larger value, taking the smaller value, taking the latter (if the latter is not preset dummy data) or taking the former (if the latter is preset dummy data), etc. Specifically, the implementation process of the prefix sum operator may include the following Step 1 to Step 3.

Step 1: each partition (a first partition, a second partition, and a third partition) performs prefix sum calculation on locally stored data, and sends the last number of the calculation result to the first partition (or a preset partition).

For example, the number of partitions p=3, which are respectively a first partition (corresponding to identifier 1), a second partition (corresponding to identifier 2), and a third partition (corresponding to identifier 3), the total data volume N=9, and the total data volume n=N/p=3 stored in each partition. The N input numbers are 1, 2, 3, 1, 2, 1, 3, 4, 2 in sequence. Before executing the prefix sum operator, the starting data corresponding to each partition are: the first partition storing 1, 2, 3; the second partition storing 1, 2, 1; the third partition storing 3, 4, 2. After performing prefix sum calculation on the locally stored data in each partition, the following data are obtained: first partition storing 1, 3, 6; second partition storing 1, 3, 4; third partition storing 3, 7, 9. Then the data 6, 4, 9 obtained after performing prefix sum calculation on the above three partitions are sent to the first partition, so that the first partition can acquire 6, 4, 9.

Step 2: the first partition arranges the received p numbers together in order of partition numbering, performs prefix sum calculation, and then sends the i-th number to the partition with identifier i+1, wherein i=1, 2, ... p-1.

After the first partition acquires 6, 4, 9, the received p numbers are arranged together, and then prefix sum calculation is performed on the above data to obtain 6, 10, 19. Then 6 is sent to the (i+1)-th partition (i.e., the second partition), and 10 is sent to the (i+1)-th partition (i.e., the third partition).

Step 3: for each partition, after the partition receives the corresponding data, the received data is added to the values obtained after prefix sum calculation within the partition.

Since the first partition does not receive any data, the data in the first partition are 1, 3, 6; the second partition receives data 6, and the values obtained after prefix sum calculation in the second partition are 1, 3, 4, and after addition and summation, 7, 9, 10 stored in the second partition are obtained; the third partition receives data 10, and the values obtained after prefix sum calculation in the third partition are 3, 7, 9, and after addition and summation, 13, 17, 19 stored in the third partition are obtained, thereby effectively implementing the prefix sum operation on data.

It should be noted that the communication volumes corresponding to the above prefix sum calculation operation are respectively: the communication volume of Step 1 is p-1, the communication volume of Step 2 is p-1, and the total communication volume is 2p-2.

On the other hand, taking input parameters as {x₁, x₂, ... , x_{N} }, N positive integers { d₁, d₂, ... , d_{N} } with a total sum of M as expansion times, and output parameters as {x₁, ... , x₁, x₂ ... , x₂, ... x_{N}, ... , x_{N}} as an example, the implementation principle of the expansion operator is described, wherein xᵢ appears consecutively dᵢ times, i=1, 2, ... N. Wherein n=N/p, m=M/p. It should be noted that if N or M is not a multiple of p, preset dummy data are supplemented to make both N and M multiples of p. Specifically, the implementation process of the expansion operator may include the following Step 11 to Step 14.

Step 11: calling the prefix sum operator on the sequence {0, d₁, d₂, ... , d_{N-1}}, wherein the addition in the above prefix sum operator is ordinary integer addition, and the result is denoted as {e₁, e₂, ..., e_{N}}.

For example, the number of partitions p=3, the total data volume N=9, the data volume of each partition n=N/p=3, the output data volume M=18, the output data volume of each partition m=M/p=6. Furthermore, for ease of description, the constant parameter for controlling the failure rate is set to 1. When the N input numbers are a, b, c, d, e, f, g, h, i in sequence, and the corresponding positive integers are 1, 3, 1, 1, 5, 2, 1, 1, 3 in sequence, after calling the prefix sum operator on {0,1,3,1,1,5,2,1,1}, the result {0, 1, 4, 5, 6, 11, 13, 14, 15} is obtained.

Step 12: modifying the data { x₁, x₂, ... , x_{N} } into structures of (x₁, e₁),( x₂, e₂),...(x_{N}, e_{N}), independently and uniformly randomly selecting a partition from the p partitions as a target partition for each piece of data, and then sending all data to their respective designated target partitions.

After the above modifying operation, the local data stored in each partition are shuffled. Assuming the data in each partition after shuffling are respectively:
first partition: (a, 0), (c, 4), (f, 11), (h, 14);
second partition: (b, 1), (e, 6), (g, 13);
third partition: (d, 5), (i, 15).

Step 13: for the data received by each partition, modifying the data (x₁, e₁),(x₂, e₂),...(x_{N}, e_{N}) into (x₁, r₁),(x₂, r₂),..(x_{N}, r_{N}).

Assuming the data content is (y₁, f₁),( y₂, f₂),...(y_{K}, f_{K}), for (yᵢ, fᵢ), assuming fᵢ = mqᵢ + rᵢ, i.e., the quotient of dividing fᵢ by m is qᵢ and the remainder is rᵢ. The data content is rewritten as (xᵢ, rᵢ), and the target partition for this data is designated as the (qᵢ + 1)-th partition. For each partition j, if the total number of data sent to partition j is less than $\left⌈m+c\sqrt{m}\right⌉ = 9$, wherein c is a pre-configured constant parameter for controlling the failure rate, if the total number of data sent to partition j is less than 9, preset dummy data are supplemented until the total number of data equals this value, and then all data are sent to the designated partition.

If the total number of data sent to partition j is greater than this value, the entire algorithm fails. In this case, the data table processing operation is re-performed, or prompt information is generated to remind the user to perform a configuration operation on the constant parameter for controlling the failure rate based on the prompt information.

After the above process, the amount of data sent to each partition is filled to be exactly 9, and after sending the data to the corresponding partition, the data in each partition are respectively (x represents preset padded dummy data):
first partition: (a, 0), (c, 4), x, x, x, x, x, x, x, (b, 1), x, x, x, x, x, x, x, x, (d, 5), x, x, x, x, x, x, x, x;
second partition: (f, 5), x, x, x, x, x, x, x, x, (e, 0), x, x, x, x, x, x, x, x, x, x, x, x, x, x, x, x, x;
third partition: (h, 2), x, x, x, x, x, x, x, x, (g, 1), x, x, x, x, x, x, x, x, (i, 3), x, x, x, x, x, x, x, x.

Furthermore, for the above constant parameter c, it is used to control the failure probability of the algorithm. Through theoretical analysis, it can be proven that the probability of algorithm failure is less than e^{-c²/2}. In practical scenarios, the user can select or configure an appropriate parameter c according to specific application requirements and the failure rate required by the application.

Step 14: among the data received by each partition, assuming the data that are not preset dummy data are (z₁, g₁),...,(zᵢ, gᵢ), the data zᵢ is placed at the (gᵢ+1)-th position, and empty positions are filled with dummy data, with a total data volume of m. Excess dummy data are discarded. Finally, the prefix sum algorithm is called on the data, wherein the addition in the prefix sum algorithm is defined as x+y=x (if y is dummy data) or y (if y is not dummy data).

After the above processing operation, the data are moved to corresponding positions, and excess dummy data are removed. The results are as follows:
first partition: a, b, x, x, c, d;
second partition: e, x, x, x, x, f;
third partition: x, g, h, i, x, x.

Then the prefix sum algorithm is called, and all dummy data are rewritten as the non-dummy data adjacent to and preceding them respectively. Note that what is called here is the global prefix sum operator, therefore, the first x in the third partition identifies the preceding adjacent or nearest non-dummy data as f, and then the "x" in the third partition is rewritten as f, thereby obtaining the processed result, specifically as follows:
first partition: a, b, b, b, c, d;
second partition: e, e, e, e, e, f;
third partition: f, g, h, i, i, i.

It should be noted that the communication volumes corresponding to the above expansion operation are respectively: the communication volume of Step 11 is 2p-2, the communication volume of Step 12 is N, the communication volume of Step 13 is approximately M (which is negligible), and the communication volume of Step 14 is 2p-2, thereby obtaining a total communication volume of approximately N+M.

Based on the above prefix sum operator and expansion operator, and taking two data tables R(A,B) and S(B,C) as input and a data table of the form T(A,B,C) with a total of M rows of data as output, wherein each table of R(A,B) and S(B,C) has N rows of data, and after a natural join operation, the obtained output result has a total of M rows. Specifically, the implementation process of the oblivious efficient algorithm for the natural join operator may include the following Step 111 to Step 11110

Step 111: calling a group aggregation operator on table R(A,B), calculating the repetition degree of each b in R(A,B), and denoting the result as table R1(B,D), wherein column B is a primary key in table R1, and D represents the repetition degree of primary key B in R.

For example, N=5, the data of table R(A,B) are {( a₁, b₁ ),( a₁, b₂ ),( a₂, b₂ ),( a₁, b₃ ),( a₂, b₄ )}, the data of table S(B,C) are {(b₁, c₁),(b₁, c₂),(b₂, c₂),(b₂, c₃),(b₃, c₄)}, then the correct natural join result T(A,B,C) of R and S should be {( a₁, b₁, c₁ ),( a₁, b₁, c₂ ),( a₁, b₂, c₂ ),( a₂, b₂, c₂ ),( a₁, b₂, b₃ ),( a₂, b₂, c₃ ), (a₁, b₃, c₄)}, i.e., M=7. For the above table R(A,B), calculating the repetition degree of each b in R(A,B), R1(B,D) is obtained as {(b₁, 1),(b₂, 2),(b₃, 1),(b₄, 1)}.

Step 112: calling a primary key-foreign key natural join operator on table R1 and table S, and denoting the result as table S2(B,C,D).

Specifically, a natural join operation is performed on table R1 and table S through the primary key-foreign key natural join operator, to obtain table S2(B,C,D). The above table S2(B,C,D) may be {(b₁, c₁, 1),(b₁, c₂, 1),(b₂, c₂, 2),(b₂, c₃,2),(b₃, c₄, 1)}.

Step 113: calling the expansion operator on table S2, wherein the data to be expanded are the column combination (B,C), and the expansion times are column D. The expansion result is denoted as table S3(B,C).

Specifically, after obtaining table S2, the expansion operator is used to perform expansion processing on table S2, and the obtained expansion result table S3(B,C) is {(b₁, c₁),(b₁, c₂),(b₂, c₂),(b₂, c₂),(b₂, c₃),(b₂, c₃),(b₃, c₄)}.

Step 114: calling a sorting operator to sort table S3 in lexicographic order by column (B,C).

The sorting operator can receive N elements (or a table with N rows) as input, rearrange the N elements (or N rows) according to a certain ordering relationship, and then output them. When these elements are tuples containing multiple components, multiple components (columns) are specified for the ordering relationship, which is called sorting in lexicographic order by multiple columns, i.e., when comparing two tuples, comparison is first performed according to the specified first column, and if the values of the tuples in this column are the same, comparison is performed according to the second column, and so on. Through calculation, the communication volume of the above sorting operation is approximately 3N.

Step 115: calling the group aggregation operator on table S, calculating the repetition degree of each b in S(B,C), and denoting the result as table S1(B,E), wherein column B is a primary key in table S1, and E represents the repetition degree of primary key B in S.

The group aggregation operator corresponds to the "group by" query statement in database queries. This operator can receive a table as input, group the rows of the table by a specified column combination, and perform an aggregation operation on another specified column within the same group, such as summation, finding the maximum value, finding the average value, etc. Through calculation, the communication volume of the above group aggregation operation is approximately N.

Specifically, after obtaining table S, the group aggregation operator is used to perform analysis processing on table S, to obtain the repetition degree corresponding to each value b in data column B in table S, thereby obtaining result S1(B,E) as {(b₁, 2),(b₂,2),(b₃, 1)}.

Step 116: calling the primary key-foreign key natural join operator on table S1 and table R, and denoting the result as R2(A,B,E).

The primary key-foreign key natural join operator is a special case of the natural join operator. It receives two tables, table R(A,B) and table S(B,C), as input, each table having N rows of data, and column B is unique in table S, i.e., the repetition degree is 1. The output is a table of the form T(A,B,C) with at most N rows of data, and the content of the table is a set . Since the primary key-foreign key natural join operator needs to merge two tables together and calls the sorting operator and the prefix sum operator once each, its communication volume is relatively large, specifically approximately 6N.

Specifically, when table S1(B,E) is {( b₁, 2 ),( b₂, 2),( b₃, 1 )} and table R is {(a₁, b₁),(a₁, b₂),(a₂, b₂),(a₁, b₃),(a₂, b₄))}, the primary key-foreign key natural join operator is used to perform a natural join operation on table S1 and table R, thereby obtaining result R2(A,B,E) as {(a₁, b₁, 2),(a₁, b₂, 2),(a₂, b₂, 2),(a₁, b₃, 1)}.

Step 117: calling the expansion operator on table R2, wherein the data to be expanded are the column combination (A,B), and the expansion times are column E, to obtain expansion result R3(A,B).

After obtaining table R2, the expansion operator is used to perform expansion operation on table R2, to obtain expansion result R3(A,B). Specifically, R3(A,B) may be {(a₁, b₁),(a₁, b₁),(a₁, b₂),(a₁, b₂),(a₂, b₂),(a₂, b₂),(a₁, b₃)}.

Step 118: adding a column F to table R3 with initial values of 1, and denoting the result as R4(A,B,F). The prefix sum operator is called on R4, wherein the addition is defined as: assuming the two tuples to be summed are (a₁, b₁, f₁) and (a₂, b₂, f₂) respectively, if a₁ = a₂ and b₁ = b₂, then their sum is (a₂, b₂, f₁ + f₂); otherwise, the sum is (a₂, b₂, f₂). The result is denoted as R5(A,B,F).

The added column F is used to determine a preset order for adjusting table R3, so as to perform data alignment between table R3 and table S. Furthermore, after the prefix sum operator is called on R4, the obtained result R5(A,B,F) is {( a₁, b₁, 1 ), (a₁, b₁, 2),(a₁, b₂, 1),(a₁, b₂, 2),(a₂, b₂, 1),(a₂, b₂, 2),(a₁, b₃, 1)}.

Step 119: calling the sorting operator to sort R5 in lexicographic order by column (B,F,A).

Step 1110: after obtaining table S3 and table R5, performing a merge operation on table S3 and table R5 to obtain a computed table T(A,B,C).

For example, assuming the i-th row in table S3 is (b,c) and the i-th row in table R5 is (a,b',f), after merging table S3 and table R5, the i-th row in computed table T is obtained as (a,b,c). Specifically, the content of table T is: {( a₁, b₁, c₁ ), (a₁, b₁, c₂ ),( a₁ b₂, c₂ ),( a₂, b₂, c₂ ),( a₁, b₂, c₃ ),( a₂, b₂, c₃ ),( a₁, b₃, c₄ )}, thereby effectively ensuring the quality and effect of data table processing.

It should be noted that Steps 111-113 and Steps 114-116 in the above embodiment are completely symmetric, and the parameter b=b' in the above embodiment. Furthermore, the communication volumes corresponding to the above expansion operation are respectively: the communication volume corresponding to Step 111 is N, the communication volume corresponding to Step 112 is 6N, the communication volume corresponding to Step 113 is N+M, the communication volume corresponding to Step 114 is 3M, the communication volume corresponding to Step 115 is N, the communication volume corresponding to Step 116 is 6N, the communication volume corresponding to Step 117 is N+M, the communication volume corresponding to Step 118 is p-1, the communication volume corresponding to Step 119 is 3M, the communication volume corresponding to Step 1110 is 0, and the total communication volume is approximately 16N+8M.

The technical solution provided by this application embodiment implements an oblivious efficient algorithm for a natural join operator in a distributed scenario. Specifically, by providing a prefix sum operator and an expansion operator, data of each table is efficiently and concisely expanded and repeated multiple times, with the number of repetitions being exactly equal to its repetition degree in the other table, and then data alignment is performed through sorting, thereby efficiently completing the natural join operation. Moreover, since the amount of data sent by each partition is the same or similar, the oblivious requirement is effectively satisfied, the communication volume of the entire data table processing operation is relatively low, thereby effectively solving the problems in the related art that implementing the oblivious algorithm is difficult and inefficient, and that there is an additional information leakage risk in the encrypted data field. Furthermore, the above implementation process also improves the quality and efficiency of data table processing, further improving the practicality of the method, and facilitating market promotion and application.

FIG. 5 is a schematic structural diagram of a data table processing apparatus according to an embodiment. As shown in FIG. 5, this embodiment provides a data table processing apparatus for executing the data table processing operation shown in FIG. 2. Specifically, the data table processing apparatus may include an obtaining module 11, an expansion module 12 and a processing module 13.

The obtaining module 11 is configured to obtain a first data table and a second data table, wherein the first data table and the second data table are both stored in a plurality of distributed partitions, and the first data table and the second data table include one or more same attribute items.

The expansion module 12 is configured to expand the second data table based on the same attribute items in the first data table, to obtain a second expanded table.

The expansion module 12 is further configured to expand the first data table based on the same attribute items in the second data table to obtain a first expanded table.

The processing module 13 is configured to add a data column to the first expanded table to obtain an adjusted expanded table, wherein parameter values included in the data column are used to reorder the first expanded table so that data in the first expanded table and data in the second expanded table are aligned.

The processing module 13 is further configured to associate the second expanded table and the adjusted expanded table to obtain an associated data table corresponding to the first data table and the second data table.

In some instances, when the expansion module 12 expands the second data table based on the same attribute items in the first data table to obtain a second expanded table, the expansion module 12 is configured to: perform group aggregation processing on the first data table based on the same attribute items in the first data table, to obtain a first aggregation table, where the first aggregation table includes repetition degrees of respective attribute values under the same attribute items; perform natural join on the first aggregation table and the second data table to obtain a second joined table; and expand the second joined table to obtain a second expanded table.

In some instances, when the expansion module 12 expands the second joined table to obtain a second expanded table, the expansion module 12 is configured to: obtain a data output amount corresponding to each partition; determine the repetition degrees of the respective attribute values as expansion times for performing an expansion operation on respective data in the second joined table; determine a target partition corresponding to the respective data based on the expansion times and the data output amount; expand the respective data based on the data output amount, to obtain expanded data; and send the expanded data to the corresponding target partition, and modify the expanded data to obtain expanded data for constituting a second expanded table.

In some instances, when the expansion module 12 determines, based on the expansion times and the data output amount, a target partition corresponding to the respective data in the second joined table, the expansion module 12 is configured to: perform prefix sum calculation on the expansion times to obtain calculated parameters; determine a value of 0 value and the calculated parameters as processed parameters; obtain quotients of the processed parameters divided by the data output amount; and determine, for the respective data, a target partition corresponding to the data based on a sum of the quotient of the data and 1.

In some instances, when the expansion module 12 performs prefix sum calculation on the expansion times to obtain the calculated parameters, the expansion module 12 is configured to: obtain a current partition corresponding to each of the expansion times; performing prefix sum calculation processing on expansion times located in the same partition, to obtain a first calculation processing sequence corresponding to each partition, where the first calculation processing sequence includes a plurality of processing results; send a last processing result in the first calculation processing sequence corresponding to each partition to a preset partition, to obtain a processing result sequence stored in the preset partition; and perform prefix sum calculation on the processing result sequence to obtain the calculated parameters.

In some instances, when the expansion module 12 performs prefix sum calculation on the processing result sequence to obtain the calculated parameters, the expansion module 12 is configured to: perform prefix sum calculation on the processing result sequence to obtain a second calculation processing sequence, where the second calculation processing sequence includes a plurality of calculation processing results; determine a target partition corresponding to each calculation processing result in the second calculation processing sequence; and send the calculation processing result to the corresponding target partition, and performing summation processing on the calculation processing result and the expansion times stored in the same target partition, to obtain the calculated parameters.

In some instances, when the expansion module 12 determines a target partition corresponding to each calculation processing result in the second calculation processing sequence, the expansion module 12 is configured to: sorting the plurality of calculation processing results included in the second calculation processing sequence based on partition identifiers corresponding to the respective calculation processing results, to obtain result sorting information; and determine, as the target partition corresponding to each calculation processing result, a sum of a current sorting position of the calculation processing result and 1.

In some instances, when the expansion module 12 expands of the respective data based on the data output amount to obtain expanded data, the expansion module 12 is configured to: determine a total number of data output bits based on the data output amount; and expand the respective data based on the total number of data output bits, to obtain expanded data.

In some instances, when the expansion module 12 expands the respective data based on the total number of data output bits to obtain expanded data, the expansion module 12 is configured to: obtain all data to be sent to the same target partition; detect whether a total sum of data bits of all data satisfies the total number of data output bits; in response to the total sum of data bits of all data not satisfying the total number of data output bits, perform a data expansion operation based on the total sum of data bits of all data and preset padding bits, to obtain expanded data, where the number of data bits of the expanded data satisfies the total number of data output bits.

In some instances, when the expansion module 12 modifies the expanded data to obtain expanded data for constituting a second expanded table, the expansion module 12 is configured to: obtain remainders of the processed parameters divided by the data output amount; determine positions of the respective data stored in the target partition based on the remainders; remove excess preset padding bits based on the positions and the data output amount, to obtain sorted data; and modifying the preset padding bits included in the sorted data as a preceding adjacent data, to obtain target data for constituting the second expanded table.

In some instances, when the expansion module 12 expands the first data table based on the same attribute items in the second data table to obtain a first expanded table, the expansion module 12 is configured to: perform group aggregation processing on the second data table based on the same attribute items in the second data table, to obtain a second aggregation table, where the second aggregation table includes repetition degrees of respective attribute values under the same attribute items; perform natural join on the second aggregation table and the first data table, to obtain a first joined table; and expand the first joined table, to obtain a first expanded table.

In some instances, when the processing module 13 adds a data column to the first expanded table to obtain an adjusted expanded table, the processing module 13 is configured to: add a data column with initial values of 1 to the first expanded table, to obtain an intermediate expanded table; compare two attribute values of two adjacent groups of data in the intermediate expanded table respectively; in response to the two attribute values corresponding to the two adjacent groups of data being both the same, perform summation processing on the data columns in the two adjacent groups of data to obtain a summed data column, and determine the two attribute values and the summed data column as data for constituting the adjusted expanded table; and in response to the two attribute values corresponding to the two adjacent groups of data being not both the same, determine the latter data of the two adjacent groups of data as data for constituting the adjusted expanded table.

In some instances, when the processing module 13 associates the second expanded table and the adjusted expanded table to obtain an associated data table corresponding to the first data table and the second data table, the processing module 13 is configured to: obtain a preset rule for sorting the first expanded table and the adjusted expanded table; sort the first expanded table and the adjusted expanded table respectively using the preset rule, to obtain a first sorted table and a second sorted table; and associate the first sorted table and the second sorted table, to obtain an associated data table corresponding to the first data table and the second data table.

The apparatus shown in FIG. 5 can execute the methods of the embodiments shown in FIGS. 1-4. For parts not described in detail in this embodiment, reference may be made to the relevant descriptions of the embodiments shown in FIGS. 1-4. The execution process and technical effects of the technical solution refer to the descriptions in the embodiments shown in FIGS. 1-4, and are not repeated herein.

In a possible design, the structure of the data table processing apparatus shown in FIG. 5 is implemented as an electronic device, which may be a controller, a personal computer, a partition, or various other devices. As shown in FIG. 6, the electronic device may include: a first processor 21 and a first memory 22. The first memory 22 is configured to store a program for executing the data table processing method provided in the embodiments shown in FIGS. 1-2 by the corresponding electronic device, and the first processor 21 is configured to execute the program stored in the first memory 22.

The program includes one or more computer instructions, wherein when the one or more computer instructions are executed by the first processor 21, the following steps are implemented: obtaining a first data table and a second data table, wherein the first data table and the second data table are both stored in a plurality of distributed partitions, and the first data table and the second data table include one or more same attribute items; expanding the second data table based on the same attribute items in the first data table, to obtain a second expanded table; expanding the first data table based on the same attribute items in the second data table, to obtain a first expanded table; adding a data column to the first expanded table to obtain an adjusted expanded table, wherein parameter values included in the data column are used to reorder the first expanded table so that data in the first expanded table and data in the second expanded table are aligned; and associating the second expanded table and the adjusted expanded table, to obtain an associated data table corresponding to the first data table and the second data table.

Furthermore, the first processor 21 is further configured to execute all or part of the steps in the embodiments shown in FIGS. 1-4.

The structure of the electronic device may further include a first communication interface 23, configured for the electronic device to communicate with other devices or communication networks.

Furthermore, an embodiment provides a computer storage medium for storing computer software instructions used by an electronic device, which includes a program involved in executing the data table processing method in the embodiments shown in FIGS. 1-4.

Furthermore, an embodiment provides a computer program product, including: a computer-readable storage medium storing computer instructions, wherein when the computer instructions are executed by one or more processors, the one or more processors are caused to execute the steps in the data table processing method in the method embodiments shown in FIGS. 1-4.

The apparatus embodiments described above are merely illustrative, wherein the units described as separate components may or may not be physically separated, and the components shown as units may or may not be physical units, i.e., they may be located in one place or distributed across multiple network units. Part or all of the modules may be selected according to actual needs to achieve the purpose of the solution of this embodiment. Those of ordinary skill in the art can understand and implement the solution without any creative effort.

Through the above description of the embodiments, those skilled in the art can clearly understand that each embodiment is implemented by adding a general-purpose hardware platform, and certainly can also be implemented by a combination of hardware and software. Based on this understanding, the above technical solution in essence, or the part that contributes to the related art, is embodied in the form of a computer product, which is implemented in the form of a computer program product implemented on one or more computer-usable storage media (including but not limited to disk storage, CD-ROM, optical storage, etc.) containing computer-usable program code.

It is described with reference to the flowcharts and/or block diagrams of the methods, devices (systems), and computer program products according to the embodiments. It should be understood that each flow and/or block in the flowcharts and/or block diagrams, and combinations of flows and/or blocks in the flowcharts and/or block diagrams, are implemented by computer program instructions. These computer program instructions are provided to a processor of a general-purpose computer, special-purpose computer, embedded processor, or other programmable device to produce a machine, such that the instructions executed by the processor of the computer or other programmable device produce means for implementing the functions specified in one or more flows of the flowchart and/or one or more blocks of the block diagram.

These computer program instructions can also be stored in a computer-readable memory that can direct a computer or other programmable device to operate in a particular manner, such that the instructions stored in the computer-readable memory produce an article of manufacture including instruction means that implement the functions specified in one or more flows of the flowchart and/or one or more blocks of the block diagram.

These computer program instructions can also be loaded onto a computer or other programmable device, such that a series of operational steps are executed on the computer or other programmable device to produce computer-implemented processing, such that the instructions executed on the computer or other programmable device provide steps for implementing the functions specified in one or more flows of the flowchart and/or one or more blocks of the block diagram.

In a typical configuration, a computing device includes one or more processors (CPU), input/output interfaces, network interfaces, and memory.

The memory may include non-persistent storage in computer-readable media, random access memory (RAM), and/or non-volatile memory, such as read-only memory (ROM) or flash RAM. The memory is an example of a computer-readable medium.

Computer-readable media include permanent and non-permanent, removable and nonremovable media, and information storage is implemented by any method or technology. Information is computer-readable instructions, data structures, modules of programs, or other data. Examples of computer storage media include, but are not limited to, phase change memory (PRAM), static random access memory (SRAM), dynamic random access memory (DRAM), other types of random access memory (RAM), read-only memory (ROM), electrically erasable programmable read-only memory (EEPROM), flash memory or other memory technology, compact disc read-only memory (CD-ROM), digital versatile disc (DVD) or other optical storage, magnetic cassettes, magnetic tape, magnetic disk storage, or other magnetic storage devices or any other non-transmission medium, which is used to store information that is accessed by a computing device. As defined herein, computer-readable media do not include transitory computer-readable media, such as modulated data signals and carrier waves.

Finally, it should be noted that: the above embodiments are only used to illustrate the technical solutions, and not to limit them; although the present disclosure has been described in detail with reference to the foregoing embodiments, those of ordinary skill in the art should understand that: they can still modify the technical solutions described in the foregoing embodiments, or perform equivalent replacements on some of the technical features thereof; and these modifications or replacements do not depart from the spirit and scope of the technical solutions of the embodiments.

## Claims

1. A method for processing a data table, comprising:
obtaining a first data table and a second data table, wherein the first data table and the second data table are both stored in a plurality of distributed partitions, and the first data table and the second data table comprise one or more same attribute items;
expanding the second data table based on the same attribute items in the first data table to obtain a second expanded table;
expanding the first data table based on the same attribute items in the second data table to obtain a first expanded table;
adding a data column to the first expanded table to obtain an adjusted expanded table, wherein parameter values comprised in the data column are used for reordering the first expanded table, so that data in the first expanded table and data in the second expanded table are aligned; and
associating the second expanded table and the adjusted expanded table to obtain an associated data table corresponding to the first data table and the second data table.

2. The method of claim 1, wherein expanding the second data table based on the same attribute items in the first data table to obtain the second expanded table comprises:
performing group aggregation processing on the first data table based on the same attribute items in the first data table to obtain a first aggregation table, wherein the first aggregation table comprises repetition degrees of respective attribute values under the same attribute items;
performing natural join on the first aggregation table and the second data table to obtain a second joined table; and
expanding the second joined table to obtain the second expanded table.

3. The method of claim 2, wherein expanding the second joined table to obtain the second expanded table comprises:
obtaining a data output amount corresponding to each partition;
determining repetition degrees of the respective attribute values as expansion times for performing an expansion operation on respective data in the second joined table;
determining, based on the expansion times and the data output amount, a target partition corresponding to the respective data;
expanding the respective data based on the data output amount to obtain expanded data; and
sending the expanded data to the corresponding target partition, and modifying the expanded data to obtain expanded data for constituting the second expanded table.

4. The method of claim 3, wherein determining, based on the expansion times and the data output amount, the target partition corresponding to the respective data in the second joined table comprises:
performing prefix sum calculation on the expansion times to obtain calculated parameters;
determining a value of 0 and the calculated parameters as processed parameters;
obtaining quotients of the processed parameters divided by the data output amount; and
determining, for the respective data, based on a sum of the quotient of the data and 1, the target partition corresponding to the data.

5. The method of claim 4, wherein performing the prefix sum calculation on the expansion times to obtain the calculated parameters comprises:
obtaining a current partition corresponding to each of the expansion times;
performing prefix sum calculation processing on the expansion times located in a same partition to obtain a first calculation processing sequence corresponding to each partition, wherein the first calculation processing sequence comprises a plurality of processing results;
sending a last processing result in the first calculation processing sequence corresponding to each partition to a preset partition to obtain a processing result sequence stored in the preset partition; and
performing the prefix sum calculation on the processing result sequence to obtain the calculated parameters.

6. The method of claim 5, wherein performing the prefix sum calculation on the processing result sequence to obtain the calculated parameters comprises:
performing the prefix sum calculation on the processing result sequence to obtain a second calculation processing sequence, wherein the second calculation processing sequence comprises a plurality of calculation processing results;
determining a target partition corresponding to each calculation processing result in the second calculation processing sequence; and
sending the calculation processing result to the corresponding target partition, and performing summation processing on the calculation processing result and the expansion times stored in a same target partition to obtain the calculated parameters.

7. The method of claim 6, wherein determining the target partition corresponding to each calculation processing result in the second calculation processing sequence comprises:
sorting a plurality of calculation processing results comprised in the second calculation processing sequence based on partition identifiers corresponding to the respective calculation processing results to obtain result sorting information; and
determining, as the target partition corresponding to each calculation processing result, a sum of a current sorting position of the calculation processing result and 1.

8. The method of claim 3, wherein expanding the respective data based on the data output amount to obtain expanded data comprises:
determining a total number of data output bits based on the data output amount; and
expanding the respective data based on the total number of data output bits to obtain the expanded data.

9. The method of claim 8, wherein expanding the respective data based on the total number of data output bits to obtain the expanded data comprises:
obtaining all data to be sent to a same target partition;
detecting whether a total sum of data bits of all data satisfies the total number of data output bits; and
in response to the total sum of data bits of all data not satisfying the total number of data output bits, performing a data expansion operation based on the total sum of data bits of all data and preset padding bits to obtain the expanded data, wherein a number of data bits of the expanded data satisfies the total number of data output bits.

10. The method of claim 3, wherein modifying the expanded data to obtain expanded data for constituting the second expanded table comprises:
obtaining remainders of the processed parameters divided by the data output amount;
determining positions of the respective data stored in the target partition based on the remainders;
removing excess preset padding bits based on the positions and the data output amount to obtain sorted data; and
modifying the preset padding bits comprised in the sorted data as preceding adjacent data to obtain target data for constituting the second expanded table.

11. The method according to any one of claims 1 to 10, wherein expanding the first data table based on the same attribute items in the second data table to obtain the first expanded table comprises:
performing group aggregation processing on the second data table based on the same attribute items in the second data table to obtain a second aggregation table, wherein the second aggregation table comprises repetition degrees of respective attribute values under the same attribute items;
performing natural join on the second aggregation table and the first data table to obtain a first joined table; and
expanding the first joined table to obtain the first expanded table.

12. The method according to any one of claims 1 to 10, wherein adding a data column to the first expanded table to obtain an adjusted expanded table comprises:
adding a data column with initial values of 1 to the first expanded table to obtain an intermediate expanded table;
comparing two attribute values of two adjacent groups of data in the intermediate expanded table respectively;
in response to the two attribute values corresponding to the two adjacent groups of data being both same, performing summation processing on the data columns in the two adjacent groups of data to obtain a summed data column, and determining the two attribute values and the summed data column as data for constituting the adjusted expanded table; and
in response to the two attribute values corresponding to the two adjacent groups of data being not both the same, determining a latter data of the two adjacent groups of data as data for constituting the adjusted expanded table.

13. The method according to any one of claims 1 to 10, wherein associating the second expanded table and the adjusted expanded table to obtain an associated data table corresponding to the first data table and the second data table comprises:
obtaining a preset rule for sorting the first expanded table and the adjusted expanded table;
sorting the first expanded table and the adjusted expanded table respectively using the preset rule to obtain a first sorted table and a second sorted table; and
associating the first sorted table and the second sorted table to obtain the associated data table corresponding to the first data table and the second data table.

14. An apparatus for processing a data table, comprising:
an obtaining module configured to obtain a first data table and a second data table, wherein the first data table and the second data table are both stored in a plurality of distributed partitions, and the first data table and the second data table comprise one or more same attribute items;
an expansion module configured to expand the second data table based on the same attribute items in the first data table to obtain a second expanded table, and expand the first data table based on the same attribute items in the second data table to obtain a first expanded table; and
a processing module configured to add a data column to the first expanded table to obtain an adjusted expanded table, wherein parameter values comprised in the data column are used for reordering the first expanded table, so that data in the first expanded table and data in the second expanded table are aligned, and associate the second expanded table and the adjusted expanded table to obtain an associated data table corresponding to the first data table and the second data table.

15. An electronic device, comprising:
a memory configured to store one or more computer instructions; and
a processor, wherein the one or more computer instructions, when executed by the processor, cause the processor to implement the method of any one of claims 1 to 13.

16. A computer program product, comprising:
a computer program which, when executed by a processor of an electronic device, causes the processor to perform the steps of the method of any one of claims 1 to 13.
